# EUROPÄISCHE PATENTSCHRIFT

(11) **EP 1 891 354 B1**
(45) Veröffentlichungstag und Bekanntmachung des Hinweises auf die Patenterteilung: **20.11.2013**
(21) Anmeldenummer: 06761960.1
(22) Anmeldetag: 02.06.2006
(51) Int. Cl.: F16H 61/00, F16J 15/10

(54) **DICHTUNG FÜR EIN GETRIEBE MIT EINER MECHATRONIK**
SEAL FOR A TRANSMISSION WITH A MECHATRONIC SYSTEM
DISPOSITIF D'ETANCHEITE POUR UNE BOITE DE VITESSES A SYSTEME MECATRONIQUE

(30) Priorität: 16.06.2005 DE 102005027832
(43) Veröffentlichungstag der Anmeldung: 27.02.2008
(73) Patentinhaber: ZF Friedrichshafen AG, 88038 Friedrichshafen (DE)
(72) Erfinder: HOERSCH, Nicolaï, 88677 Markdorf (DE)
(86) Internationale Anmeldenummer: PCT/EP2006/005258
(87) Internationale Veröffentlichungsnummer: WO 2006/133817

(56) Entgegenhaltungen:
- EP-A1- 0 673 805
- WO-A-91/10583
- DE-A1- 19 619 968
- DE-A1- 19 639 198
- GB-A- 2 249 874
- US-A- 3 232 786
- US-A- 4 083 902

## Beschreibung

Die Erfindung betrifft eine Dichtung für ein Getriebe mit einer Mechatronik und ein Verfahren dazu gemäß dem Oberbegriff der Patentansprüche 1 bzw. 7.

Ständig steigende Anforderungen an die Kraftfahrzeuge hinsichtlich Emissionen, Verbrauch, Sicherheit und Komfort bedingen immer komplexere Systeme, die in der Regel aus einer Kombination von mechanischen und elektronischen Komponenten bestehen. Wurden solche Systeme in der Vergangenheit meist noch getrennt nach elektronischem und mechanischem System entwickelt, steht heutzutage immer stärker der so genannte mechatronische Ansatz im Vordergrund, bei dem eine gemeinsame Entwicklung mechanischer und elektronischer Komponenten für eine optimal zielgerichtete Lösung sorgt.

Durch die Mechatronik, die begrifflich auch vernetzte mechanische und elektronische Steuergeräte umfasst, können unterschiedliche Assistenzsysteme im Dienst der Sicherheit miteinander verknüpft werden. Als Beispiel dient hier die Kombination von ABS-Steuergeräten und ESP-Steuergeräten mit der elektronischen Motorsteuerung oder der Steuerung eines Automatgetriebes. Mechatronische Systeme der ersten Generation optimieren lediglich die Regelung eines bestimmten Maschinenverhaltens. Aber genauso gut lässt sich auch der Mensch mit seinen Eigenschaften und Bedürfnissen in einen Regelkreis einbeziehen. Dadurch sind die mechatronischen Systeme der zweiten Generation gekennzeichnet. Hier existieren direkte Wechselwirkungen zwischen Mensch, Sensor und Aktuator.

Bekanntermaßen lässt sich mit einer Mechatronik auch die Abstimmung aller Schaltvorgänge im Getriebe exakt vornehmen. Für den Fahrer eines Fahrzeugs mit Automatgetriebe bedeutet dies eine hohe Schaltgeschwindigkeit, eine optimierte Schaltqualität und einen erhöhten Fahrkomfort. Die Schaltelektronik gibt nicht nur Signale ab, sie erhält auch Daten über die jeweilige Fahrsituation: So kann die elektronische Steuerung den Getriebeschaltzustand, den Fahrwiderstand (zum Beispiel Fahrzeuggewicht und Fahrwegsteigung) sowie das Fahrerverhalten des Fahrers erkennen und darauf reagieren - etwa mit optimierten Schaltzeitpunkten. Sie deckt dabei sehr viele Variationen ab, von sehr sportlicher bis zu sehr wirtschaftlicher Fahrweise.

Als eine Ausfallursache von Automatgetrieben mit einer direkt am oder im Getriebegehäuse integrierten Mechatronik sind elektrische Kurzschlüsse im Bereich deren Aktuatorik bekannt. Diese Kurzschlüsse werden durch metallische Späne hervorgerufen, welche durch den Ölstrom des Getriebes in den Bereich der konventionell offenen elektrischen Aktuatorkontakte gespült werden. Späne kommen durch Bearbeitung von Bauteilen, Verschleiß oder Flitter zustande und werden sich nie gänzlich vermeiden lassen.

Die Aktuatoren besitzen üblicherweise relativ große trichterförmige Öffnungen im Bereich der elektrischen Ankontaktierung, um eine sichere und schnelle Montage bzw. Verbindung von Steuerungsleitungen zu gewährleisten. Häufig werden so genannte Messerkontakte an den Enden von Steuerungsleitungen zur elektrischen Kontaktierung der Aktuatoren verwendet, welche über eine hohe Flexibilität verfügen, um die Toleranzkette zwischen den hydraulischen Aktuatoren und dem Elektronikmodul auszugleichen.

EP 0 673 805 kann als nächstliegender Stand der Technik betrachtet werden.

Vor diesem Hintergrund liegt der Erfindung die Aufgabe zugrunde, einen Spaneintrag im Bereich der elektrischen Ankontaktierung der Aktuatoren und/ oder Sensoren wirkungsvoll durch kostengünstige Maßnahmen zu verhindern.

Die Lösung dieser Aufgabe wird erreicht durch eine Vorrichtung und ein Verfahren mit den Merkmalen der Patentansprüche 1 bzw. 7, während vorteilhafte Ausgestaltungen und Weiterbildungen der Erfindung den Unteransprüchen entnehmbar sind.

Der Erfindung liegt die Erkenntnis zugrunde, dass sich der Spaneintrag im Bereich der Ankontaktierung der Aktuatoren und/oder Sensoren verhindern lässt, wenn das Elektronikmodul und die Aktuatoren und/oder Sensoren zueinander abgedichtet sind.

Demnach geht die Erfindung von einer Dichtung für ein Automatgetriebe mit einer Mechatronik, mit einem Elektronikmodul und mit einem elektrohydraulischen Schaltgerät aus, wobei das Elektronikmodul über Steckkontakte elektrisch mit mindestens einem Aktuator und/oder Sensor des elektrohydraulischen Schaltgerätes im montierten Zustand verbunden ist, wobei die Dichtung zwischen dem Elektronikmodul und dem mindestens einen Aktuator und/oder Sensor eingelegt und als ein elastisch verformbares Weichstoffelement ausgebildet ist.

Mit der Dichtung gemäß der Erfindung wird eine hervorragende Abdichtung zwischen dem Elektronikmodul und dem mindestens einen Aktuator und/ oder Sensor erzielt. Durch die Wahl der Dicke der Dichtung, der Profilierung der Dichtung und durch die Wahl der Härte des Materials kann die Dichtwirkung exakt an die Oberflächen der Gegendichtflächen angepasst werden.

In einer bevorzugten Ausführungsform ist das Weichstoffelement zur Abschirmung von einer elektrischen Kontaktstelle zwischen einem Elektronikmodul und einem Aktuator und/oder Sensor gegen Verschmutzung, insbesondere von Metallspänen, ausgebildet.

Somit werden durch metallische Späne, welche unter anderem durch den Ölstrom des Getriebes in den Bereich der offenen elektrischen Aktuatorkontakte gespült werden, hervorgerufene elektrische Kurzschlüsse im Bereich der Aktuatorik verhindert.

In einer bevorzugten Ausführungsform ist das Weichstoffelement zur flächigen Abdichtung der elektrischen Kontaktstelle bzw. des Kontaktbereiches zwischen den Kontakten des Elektronikmoduls und des Aktuators und/oder Sensors ausgebildet.

Aktuatoren der genannten Art besitzen wie erwähnt üblicherweise relativ große trichterförmige Öffnungen im Bereich der elektrischen Ankontaktierung, um eine sichere Montage zu gewährleisten. Durch die flächige Abdichtung der elektrischen Kontakte zwischen Kontaktstellen von Elektronikmodul und Aktuator und/oder Sensor wird ein Spaneintrag in diese Öffnungen wirksam und kostengünstig verhindert.

In einer bevorzugten Ausführungsform ist das Weichstoffelement als Dichtleiste und zum einzelnen Umschließen der elektrischen Kontaktstelle ausgebildet. Hierbei kann das Weichstoffelement beispielsweise mit Stegen ausgebildet sein, welches den Vorteil bietet, dass das Weichstoffelement Dichtspaltveränderungen aufgrund von Kräftewirkung durch Schaltelemente elastisch ausgleicht und stets eine zuverlässige Abdichtung bzw. Umschließung der elektrischen Kontakte gegeneinander gewährleistet. Die Stege weisen hierbei eine variable Steggeometrie bzw. Stegsteifgkeit auf. Insgesamt wird somit in allen Betriebszuständen eine ausreichende Dichtpressung sichergestellt.

In einer bevorzugten Ausführungsform ist das Weichstoffelement offenoder geschlossenzellig ausgeführt. Hierdurch wird zudem neben der schnelleren Montage eine hohe Positions-Präzision der Funktionsbereiche erreicht.

In einer anderen bevorzugten Ausführungsform ist das Weichstoffelement aus Polyurethan-Weichschaum hergestellt. Polyurethan ist ein vielseitiger Kunststoff mit hohem Innovationspotential, denn er bietet eine interessante Eigenschaftskombination aus Elastizität, Widerstandsfähigkeit und Alterungsbeständigkeit in einem weiten Temperaturbereich. Er ist flexibel und widerstandsfähig bzw. abriebfest gegenüber aggressiven Materialien und Chemikalien. Dadurch steigt die Lebensdauer der Produkte aus Polyurethan. Außerdem ist Polyurethan schwer entflammbar.

Die Vorteile von Polyurethan gegenüber Metall als Dichtung liegen vor allem in der größeren Flexibilität und dem deutlich geringeren Gewicht. Untersuchungen haben ergeben, dass sich ein Weichstoffelement aus Polyurethan als einfache und zugleich als sichere sowie zuverlässige Absicherungsmaßnahme zur Lösung der gestellten Aufgabe erweist.

In einer bevorzugten Ausführungsform ist das Weichstoffelement als Formdichtung ausgebildet. Hierbei wird eine Dichtung zwischen dem Elektronikmodul und dem Aktuator und/oder Sensor geschaffen, welche in sämtlichen Betriebszuständen eine dichtende Verbindungsstelle gewährleistet und eine einfache Montage ermöglicht.

In einer weiteren bevorzugten Ausführungsform ist das Weichstoffelement als Steg und zur flächigen Abdichtung und/oder Abschirmung mehrerer Aktuatoren und/oder Sensoren im Sinne einer Montageeinheit ausgebildet. Hierbei ermöglicht das Weichstoffelement eine einfache Montage, da durch den Steg eine exakte Positionierung ohne zusätzliche Zentrierungshilfe möglich ist.

Gemäß einer anderen Variante ist das Weichstoffelement als Platte zur großflächigen Abdichtung und/oder Abschirmung von elektrischen Leiterbahnen und/oder elektrischen Kontaktstellen ausgebildet.

Die Verbindungsstelle zwischen dem Elektronikmodul und dem Aktuator und/oder Sensor weist in der Dichtfläche neben Bohrungen zur Aufnahme einer Schraubverbindung üblicherweise Leiterbahnen und elektrische Kontaktstellen auf. Diese werden hierbei zum störungsfreien Betrieb gegeneinander und gegenüber der Außenwelt zuverlässig abgedichtet.

Zur Lösung der gestellten Aufgabe ist zudem ein Verfahren zum Abdichten eines Automatgetriebes mit einer Mechatronik mit einem Elektronikmodul und einem elektrohydraulischen Schaltgerät vorgesehen, wobei das Elektronikmodul über Steckkontakte elektrisch mit mindestens einem Aktuator und/ oder Sensor des elektrohydraulischen Schaltgerätes verbunden wird, und bei dem zur Abdichtung ein elastisch verformbares Weichstoffelement zwischen dem Elektronikmodul und dem mindestens einem Aktuator und/oder Sensor eingelegt wird.

Hierbei lassen sich elektrische Kurzschlüsse als eine Ausfallursache von Automatgetrieben mit einer Mechatronik im Bereich der Aktuatorik zuverlässig ausschließen.

Schließlich wird in einer bevorzugten Ausführungsform des Verfahrens gemäß der Erfindung das Weichstoffelement lose auf elektrische Kontakte aufgesteckt bzw. aufgelegt und erst im Zuge einer Montage von diesen durchstoßen. Dabei lässt sich das Weichstoffelement schnell und zuverlässig montieren.

Die Erfindung lässt sich anhand eines Ausführungsbeispiels weiter erläutern. Dazu ist der Beschreibung eine Zeichnung beigefügt. In dieser zeigt
- Fig. 1: eine Dichtung zwischen einem Elektronikmodul und einem Aktuator eines Automatgetriebes in einer schematischen Querschnittdarstellung und
- Fig. 2: eine Darstellung einer Dichtung als Weichstoffelement in einer beispielhaften Ausführungsform.

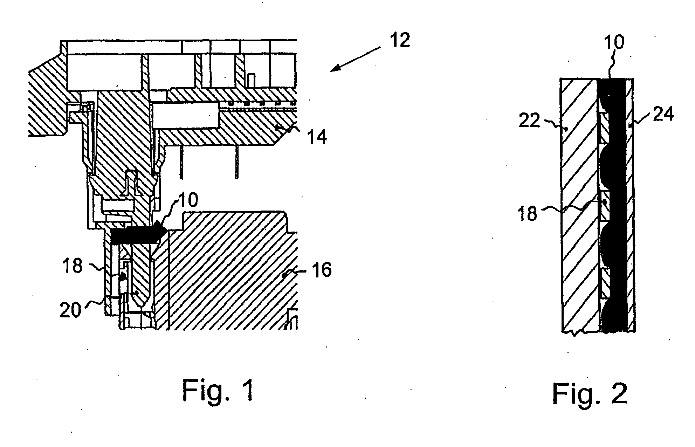

Demnach zeigt Fig. 1 eine Dichtung als Weichstoffelement 10 für ein Automatgetriebe 12 mit einem Elektronikmodul 14 und einem Aktuator 16. Der Aktuator 16 besitzt relativ große trichterförmige Öffnungen im Bereich von einer elektrischen Kontaktstelle 18, um eine sichere Montage zu gewährleisten. Als elektrischer Steckkontakt 20 werden in dieser Ausführungsform Messerschneidkontakte 20 verwendet, welche üblicherweise über eine hohe Flexibilität verfügen, um die Toleranzkette der Hydraulik und des Elektronikmoduls 14 auszugleichen. Die Dichtung ist in dieser Ausführungsform als Weichstoffelement 10 ausgebildet, welches elastisch verformbar ist.

Hierbei erweist sich das Weichstoffelement 10 ganz hervorragend geeignet zur Abschirmung der elektrischen Kontaktstelle 18 zwischen Elektronikmodul 14 und Aktuator 16 gegen Verschmutzung, insbesondere von Metallspänen. Diese können insbesondere durch einen Ölstrom im Automatgetriebe in den Bereich der konventionell offenen trichterförmigen elektrischen Kontaktstelle 18 des Aktuators 16 gespült werden. In dieser Ausführungsform ist das Weichstoffelement 10 zur flächigen Abdichtung der elektrischen Kontaktstelle 18 zwischen Kontakten von Elektronikmodul 14 und Aktuator 16 ausgebildet.

Das Weichstoffelement 10 ist dabei bevorzugt aus einem Polyurethan-Weichschaum hergestellt, allerdings sind auch andere gleichwirkende Materialien sinnvoll einsetzbar.

Fig. 2 zeigt eine schematische Querschnittsdarstellung einer Dichtung als Weichstoffelement 10 in einer beispielhaften Ausführungsform. Hierbei ist das Weichstoffelement 10 zwischen einer Trägerplatte 22 und einer Abdeckung 24 zwischen Elektronikmodul 14 und Aktuator 16 (nicht gezeigt) ausgebildet. Auch in dieser Ausführungsform ist das Weichstoffelement 10 elastisch verformbar ausgebildet.

Wie Fig. 2 verdeutlicht, ist das Weichstoffelement 10 als Formdichtung ausgebildet, wobei das Weichstoffelement 10 zusätzlich als Steg und zur flächigen Abdichtung und/oder Abschirmung ausgebildet sein kann. Hierbei ist das Weichstoffelement 10 zur großflächigen Abdichtung und/oder Abschirmung der elektrischen Kontaktstellen 18 ausgebildet, wobei die elektrischen Kontakte einzeln umschlossen sind. In Fig. 2 ist das Weichstoffelement 10 als geschlossenzellig ausgeführt. In einer anderen Ausführungsform kann das Weichstoffelement 10 offenzellig hergestellt sein.

### Bezugszeichen

- 0: Weichstoffelement
- 2: Automatgetriebe
- 4: Elektronikmodul
- 6: Aktuator
- 8: Elektrische Kontaktstelle
- 0: Steckkontakt
- 2: Trägerplatte
- 4: Abdeckung

## Patentansprüche

1. Dichtung für ein Automatgetriebe (12) mit einer Mechatronik mit einem Elektronikmodul (14) und einem elektrohydraulischen Schaltgerät, wobei das Elektronikmodul (14) über Steckkontakte (20) elektrisch mit mindestens einem Aktuator (16) und/oder Sensor des elektrohydraulischen Schaltgerätes im montierten Zustand verbunden ist, wobei die Dichtung zwischen dem Elektronikmodul (14) und dem mindestens einen Aktuator (16) und/oder Sensor einlegbar ist und als ein elastisch verformbares Weichstoffelement (10) ausgebildet ist, **dadurch gekennzeichnet, dass** das Weichstoffelement (10) zur Abschirmung von einer elektrischen Kontaktstelle (18) zwischen Elektronikmodul (14) und Aktuator (16) und/oder Sensor gegen Verschmutzung, insbesondere Metallspäne, ausgebildet ist, als eine Dichtleiste welche auf Steckkontakte (20) der elektrischen Kontaktstelle (18) aufgesteckbar ist, und erst im Zuge der Montage durch diese Steckkontakte (20) durchstoßen wird, wobei die Dichtleiste im montierten Zustand die elektrische Kontaktstelle (18) zwischen Kontakten von Elektronikmodul (14) und Aktuator (16) bzw. Sensor flächig abdichtet und die elektrische Kontaktstelle (18) einzeln umschließt.

2. Dichtung nach Anspruch 1, **dadurch gekennzeichnet, dass** das Weichstoffelement (10) offen- oder geschlossenzellig ausgeführt ist.

3. Dichtung nach Anspruch 1 oder 2, **dadurch gekennzeichnet, dass** das Weichstoffelement (110) aus Polyurethan-Weichschaum ausgebildet ist.

4. Dichtung nach Anspruch 1, 2 oder 3, **dadurch gekennzeichnet, dass** das Weichstoffelement (10) als Formdichtung ausgebildet ist.

5. Dichtung nach wenigstens einem der Ansprüche 1 bis 4, **dadurch gekennzeichnet, dass** das Weichstoffelement (10) als Steg und zur flächigen Abdichtung und/oder Abschirmung mehrerer Aktuatoren (16) und/oder Sensoren im Sinne einer Montageeinheit ausgebildet ist.

6. Dichtung nach wenigstens einem der Ansprüche 1 bis 4, **dadurch gekennzeichnet, dass** das Weichstoffelement (10) als Platte zur großflächigen Abdichtung und/oder Abschirmung von elektrischen Leiterbahnen und/oder elektrischen Kontaktstellen (18) ausgebildet ist.

7. Verfahren zum Abdichten eines Automatgetriebes mit einer Mechatronik (12) mit einem Elektronikmodul (14) und einem elektrohydraulischen Schaltgerät, wobei das Elektronikmodul (14) über Steckkontakte (20) elektrisch mit mindestens einem Aktuator (16) und/oder Sensor des elektrohydraulischen Schaltgerätes im montierten Zustand verbunden wird, wobei zur Abdichtung ein elastisch verformbares Weichstoffelement (10) zwischen dem Elektronikmodul (14) und dem mindestens einen Aktuator (16) und/oder Sensor eingelegt wird, **dadurch gekennzeichnet, dass** das Weichstoffelement (10) lose auf Kontakte gesteckt und erst im Zuge einer Montage von diesen durchstoßen wird.

## Claims

1. Seal for an automatic transmission (12) having a mechatronics system with an electronics module (14) and an electrohydraulic switching device, wherein the electronics module (14) is electrically connected to at least one actuator (16) and/or sensor of the electrohydraulic switching device by means of plug contacts (20) in the assembled state, wherein the seal can be inserted between the electronics module (14) and the at least one actuator (16) and/or sensor and is designed as an elastically deformable soft-material element (10), **characterized in that** in order to shield an electrical contact point (18) between the electronics module (14) and the actuator (16) and/or sensor against contamination, in particular by metal shavings, the soft material element (10) is designed as a sealing strip which can be mounted on plug contacts (20) of the electrical contact point (18) and is pierced by these plug contacts (20) only during the course of assembly, wherein the sealing strip seals off the electrical contact point (18) between contacts of the electronics module (14) and the actuator (16) or sensor over a surface area and individually surrounds the electrical contact point (18) in the assembled state.

2. Seal according to Claim 1, **characterized in that** the soft-material element (10) is of open- or closed-cell design.

3. Seal according to Claim 1 or 2, **characterized in that** the soft-material element (10) is formed from soft polyurethane foam.

4. Seal according to Claim 1, 2 or 3, **characterized in that** the soft-material element (10) is designed as a moulded seal.

5. Seal according to at least one of Claims 1 to 4, **characterized in that** the soft-material element (10) is designed as a web and to seal off and/or shield a plurality of actuators (16) and/or sensors over a surface area in the manner of an assembly unit.

6. Seal according to at least one of Claims 1 to 4, **characterized in that** the soft-material element (10) is designed as a plate for sealing off and/or shielding electrical conductor tracks and/or electrical contact points (18) over a large surface area.

7. Method for sealing off an automatic transmission having a mechatronics system (12) with an electronics module (14) and an electrohydraulic switching device, wherein the electronics module (14) is electrically connected to at least one actuator (16) and/or sensor of the electrohydraulic switching device by means of plug contacts (20) in the assembled state, wherein, for sealing-off purposes, an elastically deformable soft-material element (10) is inserted between the electronics module (14) and the at least one actuator (16) and/or sensor, **characterized in that** the soft-material element (10) is placed loosely on contacts and pierced by the said contacts only during the course of assembly.

## Revendications

1. Joint d'étanchéité pour transmission automatique (12) dotée d'un système mécatronique présentant un module électronique (14) et un commutateur électrohydraulique, le module électronique (14) étant en situation montée raccordé au moyen de contacts enfichables (20) électriquement à au moins un actionneur (16) et/ou capteur de l'appareil électrohydraulique de commutation,
le joint d'étanchéité pouvant être placé entre le module électronique (14) et le ou les actionneurs (16) et/ou capteurs et étant configuré comme élément (10) élastiquement déformable en matériau malléable,
**caractérisé en ce que**
pour protéger un emplacement (18) de contact électrique entre le module électronique (14) et l'actionneur (16) et/ou capteur contre l'encrassement, en particulier par des copaux métalliques, l'élément (10) en matériau malléable est configuré comme languette d'étanchéité apte à être enfichée sur des contacts enfichables (20) de l'emplacement (18) de contact électrique et n'est perforé pour la première fois par ces contacts enfichables (20) que lors du montage,
**en ce que** la languette d'étanchéité assure en situation montée une étanchéité des surfaces de l'emplacement (18) de contact électrique entre les contacts du module électronique (14) et l'actionneur (16) ou capteur et entoure séparément chacun des emplacements (18) de contact électrique.

2. Joint d'étanchéité selon la revendication 1, **caractérisé en ce que** l'élément (10) en matériau malléable présente des cellules ouvertes ou des cellules fermées.

3. Joint d'étanchéité selon les revendications 1 ou 2, **caractérisé en ce que** l'élément (10) en matériau malléable est configuré comme mousse de polyuréthane déformable.

4. Joint d'étanchéité selon les revendications 1, 2 ou 3, **caractérisé en ce que** l'élément (10) en matériau malléable est configuré comme joint d'étanchéité moulé.

5. Joint d'étanchéité selon au moins l'une des revendications 1 à 4, **caractérisé en ce que** l'élément (10) en matériau malléable est configuré comme nervure et assure l'étanchéité en surface et/ou la protection de plusieurs actionneurs (16) et/ou capteurs à la manière d'une unité prémontée.

6. Joint d'étanchéité selon au moins l'une des revendications 1 à 4, **caractérisé en ce que** l'élément (10) en matériau malléable est configuré comme plaque assurant l'étanchéité sur une grande surface et/ou la protection de pistes électriquement conductrices et/ou d'emplacements (18) de contact électrique.

7. Procédé pour assurer l'étanchéité d'une transmission automatique dotée d'un système mécatronique (12) présentant un module électronique (14) et un commutateur électrohydraulique, le module électronique (14) étant en situation montée raccordé au moyen de contacts enfichables (20) électriquement à au moins un actionneur (16) et/ou capteur de l'appareil électrohydraulique de commutation, un élément (10) élastiquement déformable en matériau malléable étant inséré entre le module électronique (14) et le ou les actionneurs (16) et/ou capteurs pour assurer l'étanchéité, **caractérisé en ce que**
l'élément (10) en matériau malléable est enfiché lâchement sur les contacts et est perforé pour la première fois par ces derniers au cours du montage.
